# EUROPEAN PATENT SPECIFICATION

(11) **EP 2 834 686 B1**
(45) Date of publication and mention of the grant of the patent: **31.05.2017**
(21) Application number: 13714912.6
(22) Date of filing: 05.04.2013
(51) Int. Cl.: G02B 6/255

(54) **OPTICAL FIBER RIBBONIZATION APPARATUS AND METHOD**
FASEROPTISCHE BANDFORMUNGSVORRICHTUNG UND VERFAHREN
APPAREIL ET PROCÉDÉ DE FORMATION DE RUBANS À PARTIR DE FIBRES OPTIQUES

(30) Priority: 05.04.2012 DE 102012205723
(43) Date of publication of application: 11.02.2015
(73) Proprietor: Xieon Networks S.à r.l., 2633 Senningerberg (LU)
(72) Inventor: WONOADI, Sugianto, 13465 Berlin (DE)
(74) Representative: Lucke, Andreas
(86) International application number: PCT/EP2013/057240
(87) International publication number: WO 2013/150149

(56) References cited:
- US-A- 5 546 491
- US-A- 6 033 124
- US-A1- 2005 018 948
- US-A1- 2009 022 457
- US-B1- 6 369 883

## Description

### FIELD OF THE INVENTION

The invention relates to an apparatus for ribbonizing optical fibers and to a ribbonization method for optical fibers.

### BACKGROUND OF THE INVENTION

An apparatus for ribbonizing short optical fibers is known in the practice and manufactured and sold by Furukawa under the name of Furukawa Ribbonization Holder.

Other conventional tools are known in the art, as, for example, 3M™ Fibrlok™ Fiber Optic Ribbon tool, which employs tape as fastening means or the Fujukura ribbonization method which employs glue as fastening means.

All conventional tool, however, suffer from several drawbacks. In particular, they do not allow arranging a plurality of fibers in a splice equipment so that these can be spliced together, removing them from the splice equipment after splicing and arranging them in a splice protector so that the splice points can be protected, without incurring damages due to mechanical stress.

A consequence of this disadvantages is that for conventional ribbonization tools and methods the process reliability is low while the process risk and the process time are high.

The problem to be solved is to overcome the disadvantages stated above and in particular to provide a solution that allows a plurality of fibers to be spliced at the same time and to be removed from a splice equipment and arranged in a splice protector without incurring damages due to mechanical stress.

A method for producing a spliced connection, wherein the spliced connection comprises two adapters which are connected with a carrier element, is known from US 5,546,491 A. A method of providing a fiber optic circuit comprising a splice holder on a base plate is known from US 2005/0018948 A1. From US 2009/0022457 A1 it is known to use a transfer handler for transferring two adapters from a splicing station to a heat shrink oven, wherein each of the adapters can be used to load a corresponding fiber on a splicer. A multi-channel mechanical splicing device is known from US 6,033,124 A. A system and a method for mass splice measurement is known from US 6,369,883 B1.

### SUMMARY OF THE INVENTION

In order to overcome the above-described need in the art, the present invention discloses a ribbonizing apparatus according to claim 1. It is also an embodiment that the ribbonizing apparatus further comprises fastening means for fastening the plurality of optical fibers with the tablet.

In a further embodiment, the ribbonizing apparatus is configured to engage with the splicing apparatus.

In a next embodiment of the invention, the plurality of optical fibers of the ribbonizing apparatus includes at least 12 optical fibers.

The problem stated above is also solved by a method of claim 5.

In a further embodiment, the method further comprises the step of engaging the tablet having the plurality of optical fibers aligned on it with the splicing apparatus.

It is also an embodiment that the plurality of optical fibers is fastened with the tablet.

The method and the apparatus provided, in particular, bears the following advantages:
a) They allow a plurality of fibers to be spliced at the same time and to be removed from a splice equipment and arranged in a splice protector without incurring damages due to mechanical stress.
b) They can be easy implemented.
c) Remarkable performance improvement can be achieved.
d) They reduce the process time.
e) They make it possible to reduce manufacturing costs.
f) They are cost effective.

### BRIEF DESCRIPTION OF THE DRAWINGS

The invention is explained by way of example in more detail below with the aid of the attached drawings.
**Fig.1** is a schematic perspective view of the ribbonizing apparatus according to an embodiment of the invention.
**Fig.2a** is a schematic perspective view of the ribbonizing apparatus during a splicing process according to an embodiment of the invention.
**Fig.2b** is a schematic perspective view of the tablet when it is removed from the splicing apparatus after a splicing process according to an embodiment of the invention.
**Fig.2c** is a schematic perspective view of the ribbonizing apparatus during a heating process according to an embodiment of the invention.

### DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

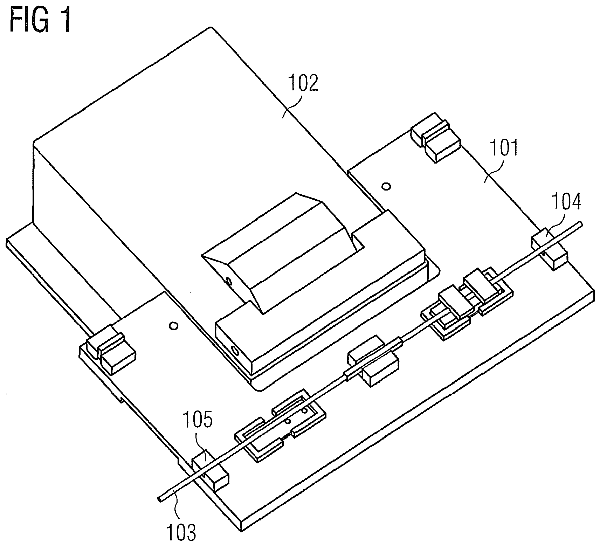

**Fig.1** is a schematic perspective view of the ribbonizing apparatus according to an embodiment of the invention showing a tablet 101 including fiber aligning means 104 and 105 for aligning a plurality of optical fibers 103 in parallel; the ribbonizing apparatus shown in Fig. 1 is arranged in a splicing apparatus 102 and engages with it. The fiber aligning means 104 and 105 may be fastening means and fasten the plurality of optical fibers 103 with the tablet 101. The tablet 101 may include metallic, plastic, carbon or wood material. The plurality of optical fibers may include at least 2 optical fibers. In a further embodiment of the invention, the plurality of optical fibers may include more than 2 optical fibers, for example at least 12 optical fibers.

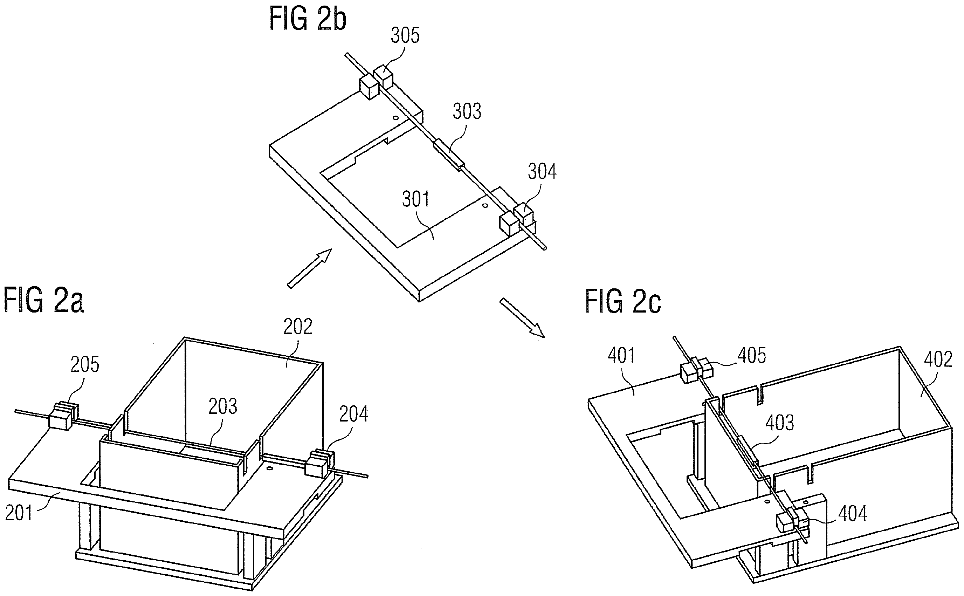

**Fig.2a** is a schematic perspective view of the ribbonizing apparatus during a splicing process according to an embodiment of the invention. In particular Fig 2a shows the tablet 201 including fiber aligning means 204 and 205 for aligning a plurality of optical fibers 203 in parallel;
the ribbonizing apparatus shown in Fig. 2a is arranged in the splicing apparatus 202 and engages with it. The fiber aligning means 204 and 205 may be fastening means and fasten the plurality of optical fibers 203 with the tablet 201.

**Fig. 2b** is a schematic perspective view of the tablet 301 when it is removed from the splicing apparatus 202 after a splicing process. In this way the plurality of optical fibers 303 aligned on the tablet 301 is not damaged due to mechanical stress. The tablet 301 includes fiber aligning means 304 and 305 for aligning the plurality of optical fibers 303 in parallel. The splice points can be protected by means of splice protector without any substantial mechanical stress.

**Fig. 2c** is a schematic perspective view of the ribbonizing apparatus during a heating process according to an embodiment of the invention. In particular Fig. 2c shows the tablet 401 including fiber aligning means 404 and 405 for aligning the plurality of optical fibers 403 in parallel; the ribbonizing apparatus shown in Fig. 2c is arranged in a splice protector apparatus 402 and engages with it. The fiber aligning means 404 and 405 may be fastening means and fasten the plurality of optical fibers 403 with the tablet 401.

The ribbonizing apparatus and the method described make it possible enable to splice several single fibers at the same time. In particular it is possible to remove a plurality of fibers after splicing from the splicing apparatus avoiding that the single fibers suffer from substantial mechanical stress before that the splice points can be protected by means of splicing protectors.

The present invention is not limited to the details of the above described principles. The scope of the invention is defined by the appended claims.

## Claims

1. System comprising a ribbonizing apparatus for optical fibers, a splicing apparatus (202) and a splice protector apparatus (402), the ribbonizing apparatus comprising:
a tablet (101) including fiber aligning means (304, 305) for aligning a plurality of optical fibers (103) in parallel on the tablet;
**characterized in that**
the ribbonizing apparatus being configured
to be movably arranged in the splicing apparatus (202) for splicing the plurality of optical fibers when the plurality of optical fibers is aligned on the tablet,
to be removed from the splicing apparatus after the splicing process, so that the plurality of optical fibers is not damaged due to mechanical stress before that the splice points can be protected by means of a splice protector, and
to be arranged in the splice protector apparatus (402) for protecting the splice points by means of a splice protector during a heating process after having been removed from the splicing apparatus (202) when the plurality of optical fibers is aligned on the tablet.

2. System according to claim 1, wherein the ribbonizing apparatus further comprises fastening means (104, 105) for fastening the plurality of optical fibers (103) with the tablet.

3. System according to any of the preceding claims, wherein the ribbonizing apparatus is configured to engage with the splicing apparatus (202).

4. System according to any of the preceding claims, wherein the plurality of optical fibers (103) includes at least 12 optical fibers.

5. Method of ribbonizing a plurality of optical fibers (103) comprising:
aligning the plurality of optical fibers on a tablet (101);
**characterized by**
movably arranging the tablet (101) having the plurality of optical fibers (103) aligned on it in a splicing apparatus (202);
splicing the plurality of optical fibers aligned on the tablet (101);
removing the tablet (101) having the plurality of optical fibers aligned on it from the splicing apparatus,
introducing the tablet (101) having the plurality of optical fibers aligned on it to a splice protector apparatus(402) for protecting the splice points by means of a splice protector during a heating process.

6. Method according to claim 5 further comprising:
engaging the tablet (101) having the plurality of optical fibers aligned on it with the splicing apparatus (202).

7. Method according to claim 5 or 6, wherein the plurality of optical fibers (103) is fastened with the tablet (101).

8. Method according to one of claims 5 to 7, wherein the plurality of optical fibers (103) includes at least 12 optical fibers.

## Patentansprüche

1. System, umfassend eine Faserbündel-Behandlungsvorrichtung (Ribbonizing Apparatus) für optische Fasern, eine Splice-Vorrichtung (202) und eine Splice-Schutzvorrichtung (402), wobei die Faserbündel-Behandlungsvorrichtung folgendes umfasst:
ein Tablettt (101), das Faser-Ausrichtmittel (304, 305) zum Ausrichten einer Mehrzahl von optischen Fasern (103) parallel auf dem Tablett umfasst;
**dadurch gekennzeichnet, dass**
die Faserbündel-Behandlungsvorrichtung dazu ausgelegt ist,
bewegbar in der Splice-Vorrichtung (202) angeordnet zu werden, zum Splicen der Mehrzahl von optischen Fasern, wenn die Mehrzahl von optischen Fasern auf dem Tablett ausgerichtet ist,
nach dem Splice-Prozess aus der Splice-Vorrichtung entnommen zu werden, sodass die Mehrzahl von optischen Fasern nicht durch mechanische Belastung beschädigt werden, bevor die Splice-Punkte mithilfe eines Splice-Schutzes geschützt werden können, und
in der Splice-Schutzvorrichtung (402) angeordnet zu werden, um die Splice-Punkte mithilfe eines Splice-Schutzes während eines Wärmeprozesses zu schützen, nachdem sie aus der Splice-Vorrichtung (202) entnommen wurde, während die Mehrzahl von optischen Fasern auf dem Tablett ausgerichtet sind.

2. System nach Anspruch 1, wobei die Faserbündel-Behandlungsvorrichtung ferner Befestigungsmitel (104, 105) zum Befestigen der Mehrzahl von optischen Fasern (103) an dem Tablet umfasst.

3. System nach einem der vorhergehenden Ansprüche, bei dem die Faserbündel-Behandlungsvorrichtung dazu ausgelegt ist, mit der Splice-Vorrichtung (202) in Eingriff zu stehen.

4. System nach einem der vorhergehenden Ansprüche, bei dem die Mehrzahl von optischen Fasern (103) mindestens 12 optische Fasern umfasst.

5. Verfahren zur Behandlung einer Mehrzahl von optischen Fasern (103), das folgendes umfasst:
Ausrichten der Mehrzahl von optischen Fasern auf einem Tablett (101);
**gekennzeichnet durch** das bewegbare Anordnen des Tabletts (101) mit der darauf ausgerichteten Mehrzahl optischer Fasern (103) in einer Splice-Vorrichtung (202);
Splicen der Mehrzahl von optischen Fasern, die auf dem Tablett (101) ausgerichtet sind;
Entnehmen des Tabletts (101) mit der darauf ausgerichteten Mehrzahl optischer Fasern aus der Splice-Vorrichtung,
Einführen des Tabletts (101) mit der darauf ausgerichteten Mehrzahl optischer Fasern in eine Splice-Schutzvorrichtung (402) zum Schützen der Splice-Punkte mithilfe eines Splice-Schutzes während eines Wärmeprozesses.

6. Verfahren nach Anspruch 5, das ferner folgendes umfasst:
das in-Eingriff Bringen des Tablets (101) mit den darauf ausgerichteten optischen Fasern mit der Splice-Vorrichtung (202).

7. Verfahren nach Anspruch 5 oder 6, wobei die Mehrzahl optischer Fasern (103) an dem Tablet (101) befestigt ist.

8. Verfahren nach einem der Ansprüche 5-7, wobei die Mehrzahl optischer Fasern (103) mindestens 12 optische Fasern umfasst.

## Revendications

1. Système comprenant un appareil de formation de rubans pour des fibres optiques, un appareil d'épissurage (202) et un appareil de protection d'épissures (402), l'appareil de formation de rubans comprenant :
une tablette (101) comprenant des moyens d'alignement de fibres (304, 305) destinés à aligner une pluralité de fibres optiques (103) en parallèle sur la tablette ;
**caractérisé en ce que**
l'appareil de formation de rubans est configuré
pour être disposé de manière mobile dans l'appareil d'épissurage (202) afin d'épissurer la pluralité de fibres optiques lorsque les fibres optiques sont alignées sur la tablette,
pour être retiré de l'appareil d'épissurage après le processus d'épissurage, de sorte que les fibres optiques ne soient pas endommagées par les contraintes mécaniques avant que les points d'épissure puissent être protégés à l'aide d'un protecteur d'épissures, et
pour être disposé dans l'appareil de protection d'épissures (402) afin de protéger les points d'épissure à l'aide d'un protecteur d'épissures pendant un processus de chauffage après avoir été retiré de l'appareil d'épissurage (202) lorsque les fibres optiques sont alignées sur la tablette.

2. Système selon la revendication 1, dans lequel l'appareil de formation de rubans comprend en outre des moyens de fixation (104, 105) destinés à fixer la pluralité de fibres optiques (103) sur la tablette.

3. Système selon l'une quelconque des revendications précédentes, dans lequel l'appareil de formation de rubans est configuré pour s'engager avec l'appareil d'épissurage (202).

4. Système selon l'une quelconque des revendications précédentes, dans lequel la pluralité de fibres optiques (103) comprend au moins 12 fibres optiques.

5. Procédé de formation de rubans pour une pluralité de fibres optiques (103) comprenant :
l'alignement de la pluralité de fibres optiques sur la tablette (101) ;
**caractérisé par**
l'agencement mobile de la tablette (101) ayant la pluralité de fibres optiques (103) alignées dessus dans l'appareil d'épissurage (202) ;
l'épissurage de la pluralité de fibres optiques alignées sur la tablette (101) ;
le retrait de la tablette (101) ayant la pluralité de fibres optiques alignées dessus de l'appareil d'épissurage,
l'introduction de la tablette (101) ayant la pluralité de fibres optiques alignées dessus dans un appareil de protection d'épissures (402) destiné à protéger les points d'épissure à l'aide d'un moyen de protection d'épissures pendant le processus de chauffage.

6. Procédé selon la revendication 5 comprenant en outre :
l'engagement de la tablette (101) ayant la pluralité de fibres optiques alignées dessus avec l'appareil d'épissurage (202).

7. Procédé selon la revendication 5 ou 6, dans lequel la pluralité de fibres optiques (103) est fixée sur la tablette (101).

8. Procédé selon l'une des revendications 5 à 7, dans lequel la pluralité de fibres optiques (103) comprend au moins 12 fibres optiques.
